Europäisches Patentamt

(19) **European Patent Office**

Office européen des brevets

(11) Publication number: **0 151 017**
**A2**

## (12) EUROPEAN PATENT APPLICATION

(21) Application number: **85300568.4**

(22) Date of filing: **28.01.85**

(51) Int. Cl.⁴: **F 16 L 33/22**

(30) Priority: **30.01.84 US 575110**

(43) Date of publication of application: **07.08.85**
**Bulletin 85/32**

(84) Designated Contracting States: **BE CH DE FR GB IT LI NL**

(71) Applicant: **The Gates Rubber Company, 999 South BroadwayStreet, Denver Colorado 80209 (US)**

(72) Inventor: **Shah, Dilip, 3303 LaSalle, Rockford Illinois 61111 (US)**
Inventor: **Antosch, Jerry J., 1522 10th Street, Rockford Illinois 61108 (US)**

(74) Representative: **Carpmael, John William Maurice et al, CARPMAELS & RANSFORD 43 Bloomsbury Square, London, WC1A 2RA (GB)**

(54) **Hose stem with locking collar and method.**

(57) A multi-piece hose stem with a nipple and external sleeve that defines a ferrule locking collar, the sleeve attached to the nipple by a preferred method of radially expanding a portion of the nipple to contact and hold the sleeve.

ACTORUM AG

0151017

# HOSE STEM WITH LOCKING COLLAR AND METHOD

## Background of the Invention

The invention relates to couplings of the stem-ferrule type that attach to reinforced, flexible hose, but more particularly, the invention relates to a hose stem with a ferrule locking collar.

Couplings that are post assembled to a hose typically include a stem that inserts into a hose end and a ferrule that is concentric with the stem. Together, the stem and ferrule define a coupling with an annular cavity for encircling the hose end. The coupling is retained to the hose end by pinching it between the ferrule and stem. Pinching is accomplished by either radially reducing the ferrule or radially increasing the stem.

In high pressure hose applications, it is necessary to retain the ferrule to the stem. In many coupling designs, the ferrule has an internal collar that extends behind an external collar of the stem.

Hose stems have a fitting end portion, a hose end portion, and an intermediate locking collar.  The fitting end portion may have any suitable fitting configuration.  As examples, the fitting end portion may be configured with male pipe threads; an external collar that retains a female swivel nut; or a tubular extension that terminates into an O-ring retaining flange.

The stem may be formed of several individual parts for economical reasons or to accommodate various fitting configurations. The assembly of several stem parts may introduce performance problems.  For example, a swivel nut may be attached to the stem by crimping a portion of it over an external collar.  The so crimped portion is subject to bending when the fitting is attached to another part or when the hose is subjected to high pressure.  Such bending of the crimped swivel nut portion may cause leakage making such a fitting unsuitable for some applications.

U.S. Patent 2,926,029 to St. Clair et al, shows a two-piece hose stem where the ferrule locking collar is made as an integral part of the fitting end portion.  A nipple is partially inserted into the fitting end and brazed to form a hose end portion.  The problem with a stem of this type is that any failure of the brazed joint subjects the coupling to leakage.

Another example of a multi-piece stem is the type where a locking collar is formed as an integral part of the hose end portion.  A tubular extension that terminates into an O-ring retaining flange is partially inserted into the hose end portion and brazed thereto.  Like the previous example, the problem with such a stem is that any failure of the brazed joint subjects the assembled coupling to leakage.

## Summary of the Invention                    0151017

In accordance with the invention, a multi-piece hose stem is provided that overcomes the internal joint leakage problem and the swivel nut flexure problem associated with the prior art. The stem of the invention is made with a nipple that has a fitting end portion, a hose end portion, and an intermediate portion that is encircled by a sleeve having an integral, ferrule locking collar. The sleeve is attached to the nipple such as with threads, by brazing, or more preferably, by radially expanding the intermediate portion of the nipple so that ribs thereon interfit with internal ribs of the sleeve. The manner in which the sleeve is attached to the nipple permits advantageous fitting end configurations.

A swivel nut with an internal collar is prepositioned over the nipple so that the collar abuts an external collar that is an integral part of the nipple. The sleeve is then positioned and attached to the nipple which retains it in place. The swivel nut collar is fabricated with sufficient bulk to prevent flexural movements that can lead to leakage.

In another configuration, the nipple defines a tubular section that terminates into a flange that may be fitted with an O-ring. The tubular extension may be bent to a desired curve as known in the art. The sleeve is attached to the nipple at the intermediate portion such as in the manner above discussed.

Under the method of the invention, the nipple is formed with an intermediate portion for attaching a sleeve. A sleeve with a collar is placed over the intermediate portion and the nipple is radially expanded to contact the sleeve and attach it into position. The nipple may be radially expanded by forming an internal collar in the nipple opposite the intermediate portion. A tool such as a punch having a larger diameter than that of the internal collar is pushed through the nipple thereby radially expanding it into the sleeve.

The invention is further described by way of example with reference to the accompanying drawings, in which:

Figure 1 is an exploded side view of a hose stem of the invention of the swivel nut type;

Figure 2 is an axial section showing the assembled parts of Figure 1 prior to attaching the sleeve;

Figure 3 is a view similar to Figure 2 but showing the nipple radially expanded attaching the sleeve;

Figure 4 is a view taken along the lines 4-4 of Figure 2 showing an alternate means for attachment;

Figure 5 is a view similar to Figure 4 and showing an alternate means for attachment;

Figure 6 is a side view of an alternate sleeve of the invention that includes wrenching surfaces; and

Figure 7 is an axial section of a hose stem with an extended fitting end portion that terminates into a flange and a hose end portion that is coupled to a hose with a ferrule attaching to the locking collar and sleeve of the type shown in Figure 6.

0151017

## Description of Preferred Embodiments

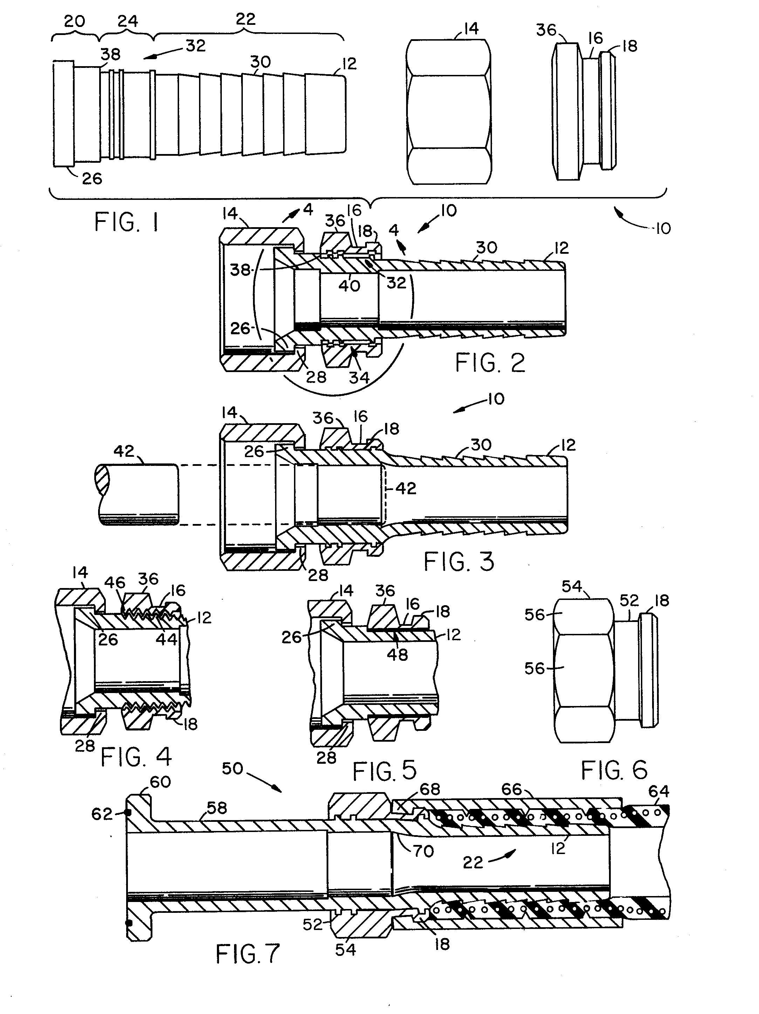

Referring to Figures 1-3, a hose stem 10 of the swivel nut type is illustrated. The three component part stem includes a nipple 12, swivel nut 14, and a sleeve 16 with an integral ferrule locking collar 18. The nipple has a fitting end portion 20, a hose end portion 22, and an intermediate sleeve attachment portion 24.

The fitting end portion may have any desired configuration such as male pipe threads, a flange, or a swivel nut adaptation as illustrated. An external collar 26 is formed at the end of the nipple for retaining the swivel nut. The swivel nut is positioned over the nipple to encircle the collar so that an internal collar 28 on the nut abuts the collar on the nipple. The internal collar of the nut has a thickness that inhibits detrimental flexing when the stem is in use. Both the internal collar of the nut and external collar of the nipple may have squared shoulders to ensure a good force transfer from the nut to the nipple.

The hose end portion of the nipple may have any desired configuration such as a cylindrical surface (not shown) or a plurality of circumferential ribs 30 as illustrated.

The intermediate portion of the nipple defines a sleeve attachment portion which also preferably includes a plurality of external circumferential ribs 32. The ribs may have any desired axial spacing. The sleeve has an internal nipple attachement portion which preferably includes a plurality of circumferential ribs 34. The axial spacing and size of the ribs substantially are matched to interfit with the ribs of the nipple. Optionally, the sleeve has a flange like member 36 which acts

0151017

as a stop for a ferrule and for the swivel nut. The nipple may have an external locating collar 38 near the intermediate sleeve attachment portion which is slightly larger in diameter than the internal diameter of the sleeve. When a sleeve is positioned over the nipple as shown in Figure 2, the locating collar positions the sleeve so that the circumferential ribs of the nipple and the sleeve are aligned juxtaposed each other. The sleeve is attached to the nipple by radially expanding the intermediate portion of the nipple. The intermediate portion may be expanded in a variety of ways. A preferred manner is achieved by providing the nipple with an internal collar 40 in the nipple ferrule. The internal collar 40 is located juxtaposed the intermediate sleeve attachment portion in the area of the circumferential ribs. A tool 42 having a larger diameter than the internal diameter of the collar is pushed there through which expands the nipple and attaches the sleeve thereto.

The sleeve may be attached to the nipple in a number of ways. Referring to Figure 4, the nipple has external threads 44 and the sleeve has internal threads 46. The sleeve is attached by screwing it over the nipple.

Figure 4 illustrates another manner in which the sleeve may be attached to the nipple. As shown, the sleeve is attached to the nipple by welding or brazing 48.

Referring to Figures 6 and 7, another stem 50 of the invention is illustrated. The sleeve 52 is similar to that as above described except that the flange-like member 54 of the sleeve defines a plurality of wrenching surfaces 56. The fitting end portion of the nipple defines a tubular extension 58 that terminates into a flange 60 that optionally retains an O-ring 62. The tubular member may be bent to any desired curve (not shown). The sleeve 52 is attached to the nipple by expanding the intermediate attachment portion by means of an internal collar and a punch using the method as above explained.

Figure 7 also illustrates the stem of the invention when used to couple hose. The hose end portion of the stem is inserted into a hose 64 and a ferrule 66 is positioned over the hose end. The ferrule is reduced in diameter such as by crimping or swagging which positions a collar 68 of the ferrule behind the ferrule locking collar 18 of the sleeve. The crimping may cause the stem to slightly collapse to a somewhat frustoconical shape 70 juxtaposed the locking collar. The radially outwardly expansion of the sleeve followed by the radially inward collapse of a portion of the sleeve does not impair its attachment. It has been determined that the attachment is sufficient to withstand the normal wrenching torque that may be applied at the wrenching surfaces.

The foregoing detailed description is not intended to limit the scope of the invention which is to be determined from the appended claims.

CLAIMS:

1. A hose stem comprising:

a nipple having a bore, a hose end portion, a fitting end portion and an intermediate, sleeve attachment portion;

a sleeve having a bore with an internal nipple attachment portion, the sleeve concentric with the nipple and positioned so the sleeve attachment portion and nipple attachment portion interface each other;

an external ferrule locking collar formed as an integral part of the sleeve; and

means for attaching the sleeve to the nipple at the sleeve and nipple attachment portions.

2. The hose stem as claimed in Claim 1 wherein the attaching means comprises a brazed joint.

3. The hose stem as claimed in Claim 1 wherein the attaching means comprises external threads on the nipple that interfit with internal threads on the sleeve.

4. The hose stem as claimed in Claim 1 wherein the attaching means comprises external circumferential ribs on the nipple and internal circumferential ribs on the sleeve, the sleeve attachment portion of the nipple radially expanded and the external and internal ribs interfitting with each other.

0151017

5.  The hose stem as claimed in Claim 4 wherein the nipple has an internal collar in the bore at the intermediate attachment portion, the collar radially expanded with the nipple and defining a part of the attachment means.

6.  The hose stem as claimed in Claim 1 wherein the sleeve has an integral flange like member which is longitudinally spaced from the ferrule locking collar toward the fitting end portion of the nipple.

7.  The hose stem as claimed in Claim 7 wherein the flange like member defines a plurality of wrenching surfaces.

8.  The hose stem as claimed in Claim 1 wherein the nipple has an external nut retaining collar at the fitting end, and further includes:

   a swivel nut with an internal collar that encircles the nipple and abuts the nut retaining collar.

9.  The hose stem as claimed in  Claim 1 wherein the nipple defines a tubular extension at the fitting end that terminates into an external flange.

10.  The hose stem as claimed in Claim 1 wherein the nipple has a positioning collar near the sleeve attachment portion that abuts and locates the sleeve.

11.   A hose stem comprising:

a nipple having a hose end portion, a fitting end portion and an intermediate portion with external circumferential ribs; and

a collared sleeve having internal circumferential ribs encircling the nipple at the intermediate portion, the nipple radially expanded at the intermediate portion and the ribs of the nipple and the ribs of the sleeve interdigitating with each other attaching the sleeve to the nipple.

-11-    0151017

12. A method for making a hose stem with a ferrule locking collar comprising the steps of:

forming a nipple with a hose end portion, a fitting end portion and an intermediate portion;

forming a sleeve with an external, ferrule locking collar;

positioning the sleeve over the intermediate portion of the nipple;

radially expanding the intermediate portion of the nipple and simultaneously attaching the sleeve to the nipple.

13. The method as claimed in Claim 12 which further includes the steps of:

forming the nipple with an internal collar at the intermediate portion, the internal collar having an internal diameter; and

pushing a tool having a larger outside diameter than that of the internal collar, through said collar and simultaneously radially expanding the intermediate portion of the nipple.

1/1      0151017

FIG. 1

FIG. 2

FIG. 3

FIG. 4

FIG. 5

FIG. 6

FIG. 7